Europäisches Patentamt

European Patent Office

Office européen des brevets

(11) Publication number: **0 080 633**
**A1**

## EUROPEAN PATENT APPLICATION

(21) Application number: **82110492.4**

(22) Date of filing: **13.11.82**

(51) Int. Cl.³: **B 60 N 1/06**

(30) Priority: **27.11.81 GB 8135897**

(43) Date of publication of application:
**08.06.83 Bulletin 83/23**

(84) Designated Contracting States:
**DE GB SE**

(71) Applicant: UOP Inc.
10 UOP Plaza Algonquin & Mt. Prospect Roads
Des Plaines Illinois 60016(US)

(72) Inventor: Tyson, James
164 Bants Lane
Durston Northampton(GB)

(74) Representative: Taylor, Derek George et al,
Mathisen, Macara & Co. Lyon House Lyon Road
Harrow, Middx. HA1 2ET(GB)

(54) A vehicle seat with a pivotally movable backframe.

(57) The back frame (11) is hingedly supported on a seat frame (10) and has a locking device (14) for locking the back frame (11) at any one of a number of selected inclinations. The locking device (14) comprises two mutually inclined slots (15,17) formed in overlapping relationship in overlapping portions (10a) of the seat frame (10) and (11a) of back frame (11), and a guide pin (18) extending through the two slots (15,17) at their intersection. A locking member (21), having a plurality of spaced recesses (21a) therein, is secured to one of the frames and is pivotally movable to bring a different one of said recesses (21a) into engagement with the follower pin (18) at each of the selected inclinations of the back rest.

FIG. 4.

EP 0 080 633 A1

## A VEHICLE SEAT WITH A PIVOTALLY

## MOVABLE BACKFRAME

This invention relates to a vehicle seat having a seat frame on which a seat rest cushion can be mounted, and a back frame on which a back rest cushion can be mounted, the back frame and seat frame being interconnected by one or more hinge devices to allow the back frame to be moved pivotally and secured at a selected inclination by one or more locking devices.

Many devices have been disclosed for locking the back frame of a vehicle seat to a seat frame at a selected inclination, but most of these are complex and expensive devices and many are not designed to stand up to heavy loads such as are likely to be placed upon them when the vehicle seat is mounted in a tractor or other rough riding vehicle.

It is known, for example, from UK-A-2078850 to provide a vehicle seat comprising a seat frame, a back frame, hinge means supporting the back frame for pivotal movement relative to the seat frame, and one or more locking devices for locking the back frame at any selected one of a plurality of different angles of inclination of the back frame relative to the seat

2  0080633

frame, the or each locking device comprising a guide pin, a guide means provided on a part of the seat frame and defining a guide path for the movement thereby of the guide pin.

A requirement exists for a simple device for locking the back frame to the seat frame of a vehicle seat at any of the selected plurality of inclinations. This is achieved, in accordance with the present invention, by a second guide means provided on a part of the back frame and defining a second guide path for the movement therealong of the guide pin, the two guide paths being disposed in mutually intersecting relationship and the guide pin being located at all times at the intersection of the guide paths, each different position of the pin relative to the guide paths corresponding to a different angle of inclination of the back frame relative to the seat frame, and a locking member for releasably locking said pin in any selected one of a plurality of positions. of the pin relative to one of said frames.

One embodiment of a vehicle seat in accordance with the invention will now be described by way of example only with reference to the accompanying drawings in which:-

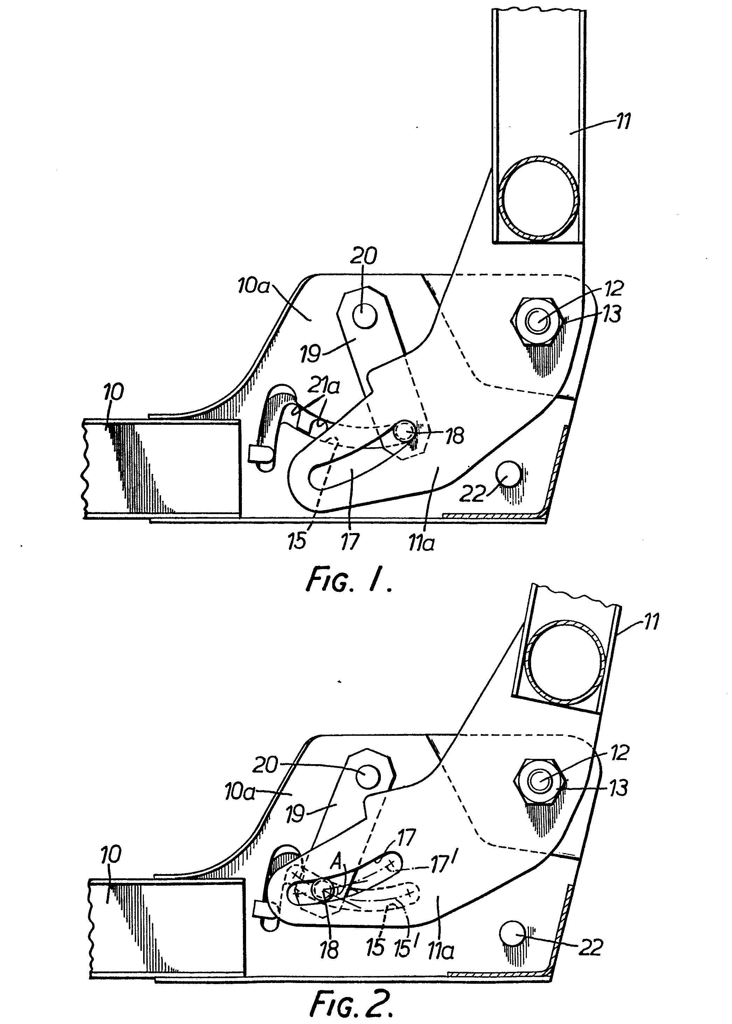

Figure 1 is a side elevation of a vehicle seat in accordance with the invention showing a back frame of the seat locked to a seat frame of the seat in a fully upright position;

Figure 2 is a view corresponding to that of Figure 1 but showing the back frame in a rearwardly tilted position;

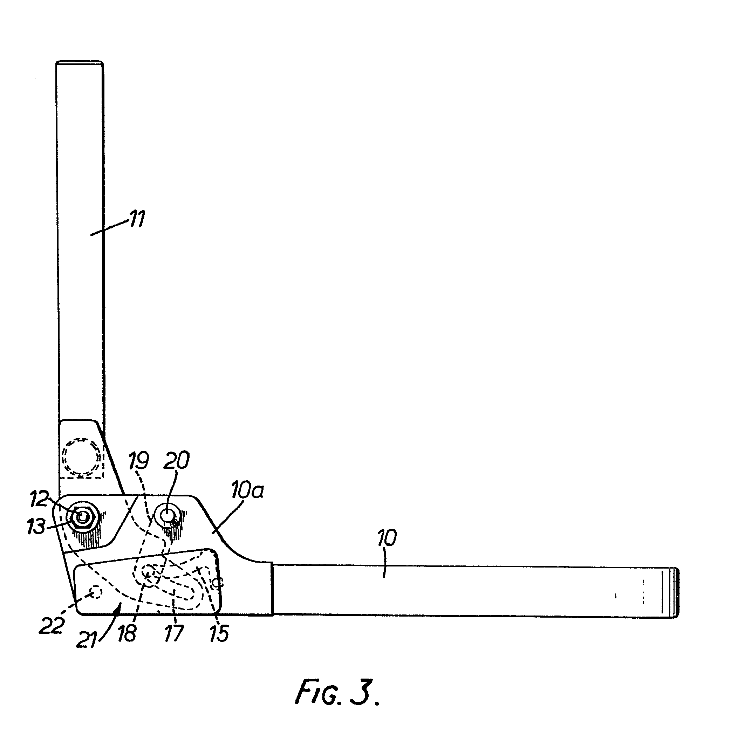

Figure 3 is a view corresponding to that of Figure 1 but from the opposite side of the locking device shown in Figure 1;

Figure 4 is an exploded view of part of the vehicle seat of Figure 1 showing the features of the locking device.

As shown in the drawings, the vehicle seat comprises a seat frame 10, for supporting a seat rest cushion (not shown), a back frame 11, for supporting a back rest cushion (not shown), and a hinge pin 12 at each of the lower corners of the back frame for supporting the back frame on the seat frame for pivotal movement about a horizontal axis transverse to the seat. The hinge pin 12 is secured in position by a nut 13.

The back frame 11 has a portion 11a which overlaps a portion 10a of the seat frame, and the portions, on one or both sides of the seat, form part of a locking device 14 for locking the back frame at a selected inclination to the seat frame.

The locking device, as shown in the drawings, comprises a first slot 15 formed in the seat frame portion 10a and defining a first guide path 15', the slot being arcuate about an aperture 16, a second slot 17 formed in back frame portion 11a and defining a second guide path 17' which intersects guide path 15', and a guide pin 18 which extends through both slots 15 and 17 at the intersection of the guide paths 15',17' and which is mounted on an arm 19 depending from a hinge pin 20. The hinge pin 20 is received in the aperture 16.

The shape and relative inclination of the slots 15 and 17 are such that, in the most upright position of the back frame, the guide pin 18 is located at the rearmost end of slot 15 and at the rearmost end of slot 17. Conversely in the most rearwardly inclined position of the back frame, the guide pin 18 is located at the foremost end of slot 15 and the foremost end of slot 17.

The inclination of the two slots to each other and the curvature of the slots are such that, at each intermediate position of the back frame, the guide pin 18 will be at a different position on the two slots.

Preferably the distance moved by the pin will be the same for each degree of movement of the back frame relative to the seat frame.

It will be evident that means could be provided for locking the movement of the arm 19 or of the guide pin 18 at any selected position relative to the seat frame.

In the case of the illustrated device however, it is desired to permit the back frame to move over an angle of $16^{\circ}$, and lock the back frame to the seat frame in five equiangular positions which are therefore spaced apart by $4^{\circ}$ each.

This is achieved by a locking member 21 which has a pivot pin 22 engaging in an aperture 23 in the seat frame and five equidistantly spaced recesses 21a disposed along a line having the same curvature as that of slot 15 and into each of which the guide pin 18 can engage to lock the guide pin against further movement along slot 15. A biasing spring 24 acts between the locking member 21 and the seat frame 10 to urge the locking member into engagement with the guide pin.

In fitting the locking member 21 to the seat frame, a hook 26 on the forward end of member 21 is engaged, in a loose fit, in an extended portion 15a of the slot 15. This extended portion is arcuate about the aperture 23. The hook 26 is a sufficiently loose fit in portion 15a to allow pivot pin 22 to be inserted thereafter into aperture 23. Pin 22 is secured within the aperture 23 by a lock clip 27.

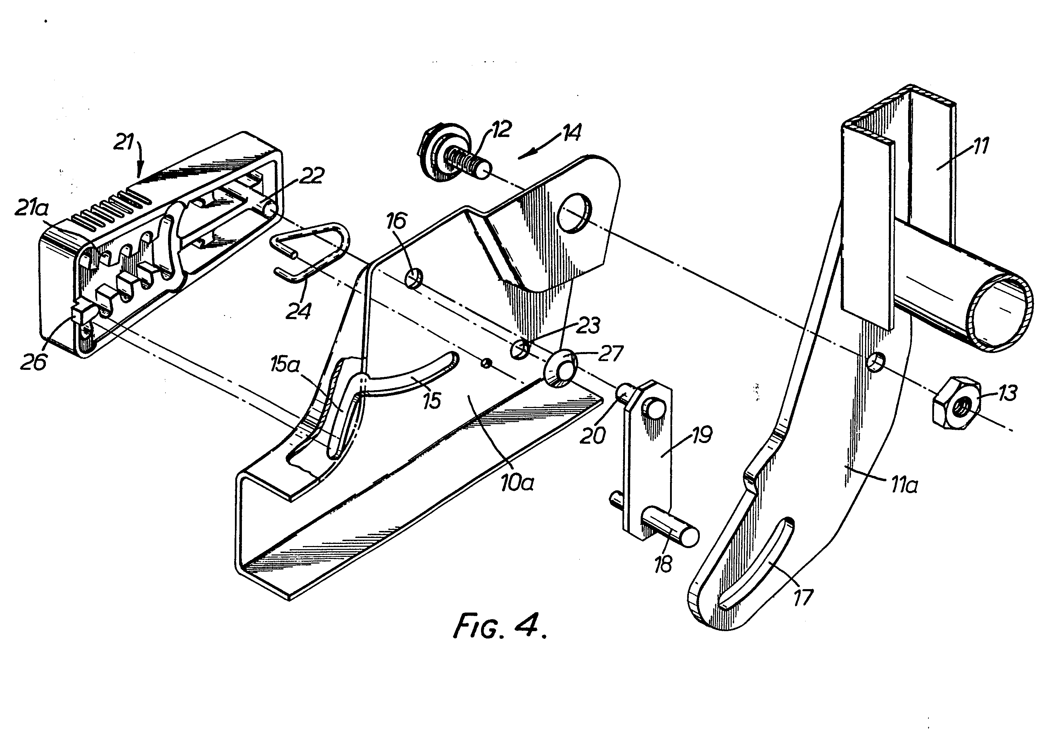

It will be seen that the locking member 21 shown in Figure 4 is symmetrical about a plane containing the pivot pin 22, and this enables it to be located at either side of the seat. It will be understood that the locking device can be provided at either or both sides of the vehicle seat.

The inclination, angle A, of the two slots to each other, or more precisely the inclination of the tangents to the guide paths 15',17' at their intersection, will be as small as practicable to minimise load on the locking member and to enable the slots to be long and so space the recesses 21a apart adequately. On the other hand the size of the angle A should be large enough to ensure that the reaction between the pin 18 and the side of slot 17 which is engaged by the pin 18 produces a component along the slot 17 sufficient to overcome the friction between the pin 18 and the slot 17 when the locking device is unlocked. Otherwise manual movement of the back frame by the seat occupant would be prevented, unless other means are provided for moving the pin.

In operation of the device, the occupant of the seat will lean forward to remove load from the back frame 11 and will lift the locking device 21 to disengage the guide pin 18 from the recesses 21a of the locking device. The back frame 11 will then be free to be moved forwardly or backwardly (although a biasing spring will normally be provided to bias the back frame in a forward direction). When the back frame has been moved to a position selected by the seat occupant the locking device 21 can be released and will be biased by its spring 24 into engagement with the guide pin 18, and the guide pin will engage in the next adjacent recess 21a in the rearward or forward direction depending on whether the seat occupant is causing the back frame to move forwardly or rearwardly.

The word 'pin' as used herein with reference to the guide pin 18 is intended to include any device capable of engaging in and following the two slots 15 and 17.

It will be appreciated from the foregoing description of the illustrated embodiment that the arm 19, on which the pin 18 is mounted, guides the pin 18 along the arcuate guide path 15' which is fixed relative to the seat frame 10 and corresponds to the centre line of the slot 15. However the slot 15 plays no active part in the operation of the device other than permitting pin 18 to pass through the seat frame 10 to engage in the locking member 21. The slot 15 could therefore be of any shape which permitted access for the pin 18 to the member 21.

It is only important that pin 18 be guided along a first guide path 15', fixed relative to the seat frame and defined in particular by slot 15, which intersects at angle A the guide path 17' which is fixed relative to the back frame, in particular that defined by the slot 17.

Thus, if slots 15 and 17 are provided as illustrated, it is not essential that pin 18 be carried by the swinging arm 19. Arm 19 could thus be replaced by any means which supported pin 18 perpendicular to the plane of slots 15 and 17, such for example as a plate, equivalent to arm 19, through which pin 18 passed perpendicularly thereto, the plate being otherwise free to follow the movement of pin 18 along the two slots.

Again, if slot 15 is provided as illustrated, slot 17 could be replaced by other guide means such for example as a swinging arm pivoted to part 11a to guide the pin 18 along the guide path 17'.

8223 B:2JJK1

## CLAIMS

1.    A vehicle seat comprising a seat frame, a back frame, hinge means supporting the back frame for pivotal movement relative to the seat frame, and one or more locking devices for locking the back frame at any selected one of a plurality of different angles of inclination of the back frame relative to the seat frame, the or each locking device comprising a guide pin, a guide means provided on a part of the seat frame and defining a guide path for the movement therealong of the guide pin, characterised by a second guide means (17 or 19) provided on a part (11a) of the back frame (11) and defining a second guide path (17') for the movement therealong of the guide pin (18), the two guide paths (15',17') being disposed in mutually intersecting relationship and the guide pin (18) being located at all times at the intersection of the guide paths, each different position of the pin (18) relative to the guide paths (15',17') corresponding to a different angle of inclination of the back frame (11) relative to the seat frame (10) and a locking member (21) for releasably locking said pin in any selected one of a plurality of positions of the pin (18) relative to one of said frames (10,11).

0080633

2.    A vehicle seat according to claim 1 characterised in that one (17) of said guide means is a slot formed in said part of the back frame and which defines said second guide path (17') and the other of said guide means is an arm (19) pivoted to the other of said frames and on which said pin (18) is carried for movementalong the guide path (15') of said other guide means (19).

3.    A vehicle seat according to claim 1 characterised in that both of said guide' means (15,17) are slots formed in mutually overlapping parts of the seat frame (10) and back frame (11),the pin extending through both said slots at the position at which the guide paths (15',17'), defined by said slots, intersect each other, and a support (19) for supporting the pin for movement along both said slots (15,17).

4.    A vehicle seat according to any preceding claim characterised in that said locking member (21) is . pivoted to said one frame (10) and is formed with a plurality of spaced recesses (21a) in each of which said pin (18) can engage to lock the back frame (11), each recess corresponding to a different inclination of the back frame relative to the seat frame.

5.    A vehicle seat according to any preceding claim characterised by a spring (24) which biasses the locking member into engagement with said pin (18).

6.    A vehicle seat according to claim 3 characterised in that the  centre lines of the two slots are curves and the tangents to the curves at each point of their intersection make an angle A substantially less than 90$^{\circ}$ with each other.

8223:B:2JJKl

0080633

1/3

FIG. 1.

FIG. 2.

0080633

FIG. 3.

0080633

FIG. 4.

European Patent
Office

**EUROPEAN SEARCH REPORT**

**0080633**
Application number

EP 82 11 0492

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| | --- | | B 60 N    1/06 |
| Y | FR-A-2 356 537   (TURNER) <br> *The whole document* | 1 | |
| | --- | | |
| Y | US-A-3 361 474   (KÖLLE) <br> *The whole document* | 1 | |
| | ----- | | |

**TECHNICAL FIELDS SEARCHED (Int. Cl. ³)**

B 60 N

The present search report has been drawn up for all claims

| Place of search THE HAGUE | Date of completion of the search 18-02-1983 | Examiner HEROUAN E. |
|---|---|---|